# EUROPÄISCHE PATENTSCHRIFT

(11) **EP 2 191 926 B1**
(45) Veröffentlichungstag und Bekanntmachung des Hinweises auf die Patenterteilung: **13.04.2011**
(21) Anmeldenummer: 09010634.5
(22) Anmeldetag: 19.08.2009
(51) Int. Cl.: B23K 15/00, B23K 15/02, B23K 15/10

(54) **Verfahren zum Schweissen von Bauteilen mittels eines Elektronenstrahls mittels hochfrequenter Strahlablenkung**
Method for welding components with an electron beam with high frequent beam oscillation
Procédé de soudage de composants à l'aide d'un faisceau d'électrons avec oscillations hautes fréquences dudit faisceau

(30) Priorität: 27.11.2008 DE 102008059419
(43) Veröffentlichungstag der Anmeldung: 02.06.2010
(73) Patentinhaber: DB Netz AG, 60468 Frankfurt am Main (DE)
(72) Erfinder: Martin, Andreas, 44892 Bochum (DE)
(74) Vertreter: Zinken-Sommer, Rainer

(56) Entgegenhaltungen:
- DE-A1- 10 157 403
- GB-A- 1 388 202
- JP-A- 56 080 385
- JP-A- 60 003 986

## Beschreibung

Die Erfindung betrifft ein Verfahren zum Schweißen von Bauteilen mittels eines Elektronenstrahls gemäß dem Oberbegriff des Anspruchs 1 (siehe, z.B., GB 1,388,202 A).

Die Elektronenstrahltechnologie hat sich in vielen Industriebereichen als zusätzliche Möglichkeit zur Energieeinbringung bei Schmelzschweißverfahren etabliert. Seit einiger Zeit wird auch daran gearbeitet, die Herzstücke von Weichen für Schienenverkehrswege als Alternative zu Schmiedeteilen durch das Verschweißen zweier Regelprofil-Schienen herzustellen. Für diese Aufgabe bietet sich das Elektronenstrahlschweißen auf Grund des ihm technologisch innewohnenden Tiefschweißeffektes an. Hierunter versteht der Fachmann das Fortpflanzen der Dampfkapillare, die sich an der Auftreffstelle des Elektronenstrahls auf der zu fügenden Stoßfuge bildet, entlang der Stoßfuge in das Materialinnere. Hierdurch sind schlanke Schweißnähte mit Tiefen von bis zu über 10 cm erzielbar. Dies ist in Bezug auf die großen Bauteil-Abmessungen der zu einem Herzstück zu verschweißenden Schienenprofile von Vorteil. Ein Beispiel hierzu ist dem Fachmann aus der US 5,704,570 bekannt.

Da die Weichenherzstücke in Schienenverkehrswegen besonderen dynamischen Beanspruchungen unterworfen sind und deshalb einem starken Verschleiß unterliegen, besteht die Zielstellung, die Weichenherzstücke zur Minderung des verschleißinduzierten Aufwandes (häufiges Aufarbeiten, frühzeitiges Tauschen) aus besonders verschleißfesten, insbesondere bainitischen Stählen herzustellen.

In der Praxis hat es sich jedoch herausgestellt, dass es beim Verschweißen bainitischer Schienenprofile insbesondere im Bereich der Schienenköpfe zu Lunkerbildung in der Schweißnaht kommt. Eine Variation der Intensität des Strahlstroms konnte diese Lunkerbildung nicht zuverlässig beseitigen.

Aus der US 6,639,173 B1 ist das Aufteilen des Elektronenstrahles mittels eines Strahlteilers in zwei Teilstrahlen bekannt, wobei der vorlaufende Teilstrahl der Herstellung der Schweißnaht und der nachfolgende Teilstrahl der Wärmebehandlung der Schweißnaht dienen, wodurch die Bildung von Spannungsrissen verhindert werden soll. Dieser Ansatz stellt jedoch lediglich eine Nachwärmebehandlung in Form eines Spannungsarmglühens bei 550°C der mittels des ersten Teilstrahls erzeugten Schweißnaht dar. Damit können aber keine strukturellen Fehler (z.B. Lunker) ausgearbeitet werden, die sich durch das Einwirken des Schweißstrahls eventuell ergeben.

Die GB 1,388,202 A offenbart eine Vergrößerung des Schweißbades durch Elektronenstrahl-Pendeln, wodurch die Abkühlgeschwindigkeit im Nachlaufbereich des Schweißbades verringert und das Gefüge der Schweißnaht verbessert werden soll. Eine verringerte Abkühlgeschwindigkeit und die daraus resultierende Gefügeverbesserung ist jedoch ebenfalls nicht zur Verringerung von Fehlern in Form von Lunkern in der Schweißnaht geeignet.

Auch die DE 101 57 403 A1 lehrt dem Fachmann die Anwendung des Strahlpendelns zum rissfreien Elektronenstrahl-Schweißen schwer schweißbarer Materialien. Durch das Oszillieren des Elektronenstrahls in Längsrichtung der Schweißnaht ("Strahlpendeln") werden in der Schweißnaht ein erstes, in Schweißrichtung vorausliegendes sowie ein zweites, in Schweißrichtung zurückliegendes Schmelzbad erzeugt. Das erste Schmelzbad ("Vorwärm-Schmelzbad") hebt das Temperaturniveau des zu fügenden Materials beidseits der Stoßfuge und in der räumlichen Umgebung der Schweißzone soweit an, dass weder bei der Erstarrung der Schmelze des zweiten Schweißbades ("Haupt-Schweißbad") noch beim nachfolgenden Abkühlen in der Schweißnaht und deren Wärmeeinflusszone zu hohe Temperaturgradienten zum benachbarten Material auftreten. Auf diese Weise werden Umwandlungs- und/oder Abkühlungsspannungen in der Wärmeeinflusszone des Haupt-Schweißbades verringert und damit auch Rissbildungen vermieden. Das Vorwärm-Schmelzbad ist räumlich kleiner dimensioniert als das Haupt-Schweißbad und weist insbesondere eine geringere Tiefe der Wärmeeinflusszone auf. Allerdings ist gemäß der Lehre der DE 101 57 403 A1 kein vollständiges Durchschweißen der beiden Fügeflächen vorgesehen. Am Fuß der Schweißnaht verbleibt bei beiden Fügepartnern ein Materialbereich, der zwar thermisch beeinflusst aber nicht aufgeschmolzen wird. Dies verhindert ein schwerkraft-induziertes Austreten flüssiger Schmelze.

Für Anwendungen, bei denen ein vollständiges Durchschweißen beider Fügeflächen notwendig ist - wie z.B. beim o.g. Schweißen von Weichenherzstücken aus Regelprofil-Schienen -, würde die Anwendung dieses bekannten Standes der Technik aber die Notwendigkeit einer Schweißbadsicherung mit sich bringen. Das Einbringen einer solchen Schweißbadsicherung ist jedoch zeitraubend und kostenintensiv.

Die DD 131 906 A1 schlägt anstelle des Strahlpendelns eine in periodischer Folge sprunghafte Strahlablenkung zwischen mindestens zwei Einwirk-Orten vor. Allerdings orientiert sie den Fachmann auf das Erreichen gleicher Strahleindringtiefen an den einzelnen Einwirk-Orten.

Der Erfindung liegt deshalb die Aufgabe zugrunde, ein Verfahren zum Schweißen von Bauteilen mittels eines Elektronenstrahls, der mittels hochfrequenter Strahlablenkung zwischen einem ersten, in Schweißrichtung vorausliegenden Schmelzbad und einem zweiten, in Schweißrichtung nachfolgenden Schmelzbad pendelt, bereitzustellen, das bei horizontaler und vertikaler Schweißnaht ein vollständiges und fehlerfreies Durchschweißen beider Bauteile ohne Schweißbadsicherung ermöglicht.

Ein Verfahren gemäß der Erfindung ist im Anspruch 1 definiert.

Auf diese Weise wird erreicht, dass die beiden Schmelzbäder von demselben Elektronenstrahl ohne Wechselwirkung zueinander aufgeschmolzen werden können. Durch die hohe Frequenz beim Wechseln zwischen den beiden Positionierungen des Elektronenstrahls ist jedes der beiden entstehenden Schmelzbäder während der Verweildauer des Elektronenstrahls im Bereich des jeweils anderen Schmelzbades nur für eine derart kurze Zeitspanne ohne Energiezufuhr, dass es zu keinem Zusammenbruch der sich im jeweiligen Schweißbad im Einwirkungsbereich des Elektronenstrahls bildenden Dampfkapillare kommt. Das erste Schmelzbad gewährleistet hierbei das vollständige Durchschweißen der beiden zu fügenden Bauteile. In diesem Zusammenhang wird auf das Anbringen einer Schmelzbadsicherung im räumlichen Bereich des ersten Schmelzbades bewusst verzichtet und somit dort ein Ausfließen von Schweißgut im Bereich der Schweißwurzel in Kauf genommen. Durch Anwendung des erfindungsgemäßen Verfahrens werden die mit diesem bewusst in Kauf genommenen Materialverlust im Bereich des ersten Schweißbades einhergehenden Fehlstellen, insbesondere Lunker, mittels eines zweiten, nachfolgenden Schmelzbades wieder ausgearbeitet, wobei das nachfolgende Schmelzbad nur bis zu einer definierten Tiefe von circa 60 % - 70 % bezogen auf die Gesamttiefe der zu verschweißenden Bauteile aufgeschmolzen wird. Die verbleibende nicht-aufgeschmolzene Materialschicht dient somit als Schweißbadsicherung für das zweite Schmelzbad.

Es hat sich in umfangreichen Versuchsreihen herausgestellt, dass die Fehlstellen- bzw. Lunkerbildung im Bereich des ersten Schmelzbades stets in einer Tiefenlage oberhalb dieser Materialschicht abläuft. Dies bedeutet, dass das untere Drittel stets frei von Schweißfehlern ist und gemäß der Idee der vorliegenden Erfindung durch das zweite Schmelzbad gegebenenfalls thermisch beeinflusst, jedoch nicht aufgeschmolzen wird und somit als Schweißbadsicherung für das zweite Schmelzbad vorgesehen werden kann. Unter Anwendung des an sich bekannten Schweißpendelns kann somit die Bildung von Fehlstellen in dem vorausliegenden ersten Schmelzbad in Kauf genommen und somit dort auch auf das Vorsehen bzw. Anbringen einer Schweißbadsicherung verzichtet werden.

Das erfindungsgemäße Verfahren sieht weiterhin vor, dass die pendelnde Strahlablenkung mit einer Amplitude der Pendelbewegung in Schweißnahtrichtung von 5 bis 10 mm erfolgt.

Auf diese Weise ist der in Schweißrichtung zu betrachtende Abstand zwischen beiden Schmelzbädern (= Amplitude der Pendelbewegung) derart dimensioniert, dass das im Einflussbereich der ersten Elektronenstrahl-Positionierung aufgeschmolzene Material in Abhängigkeit von der Vorschub- bzw. Schweißgeschwindigkeit sowie den Prozessparametern Vorwärm- und Umgebungstemperatur zuverlässig erstarrt bevor es in die Wärmeeinflusszone der zweiten Elektronenstrahl-Positionierung eintritt.

Der Erfindungsgedanke wird in nachfolgendem Ausführungsbeispiel verdeutlicht. Es zeigt:
- **Figur 1**: Schnitt durch die Schweißebene (entlang des Fügespaltes)
- **Figur 2**: Draufsicht auf den Bereich beider Schmelzbäder während des Schweiß- prozesses
- **Figur 3**: Draufsicht auf den Bereich beider Schmelzbäder während des Schweiß- prozesses

Bei den zu fügenden Bauteilen (A, B) handelt es sich um Schienenprofile aus dem Werkstoff 1.8523, dessen chemische Zusammensetzung dem Werkstoff 35CrMo11-3 ähnelt. Beide Schienenprofile sind zur Herstellung planer Fügeflächen mechanisch vorbearbeitet. In einem ersten Verfahrensschritt werden beide Bauteile auf 550°C vorgewärmt, damit der Fügevorgang bei einer Schweißtemperatur von 420° - 450° C ablaufen kann. Nur unter dieser Bedingung kann aus diesem Werkstoff bei Abkühlung an Luft ein bainitisches Gefüge in der Schweißnaht und der hieran angrenzenden Wärmeeinflusszone ausgebildet werden.

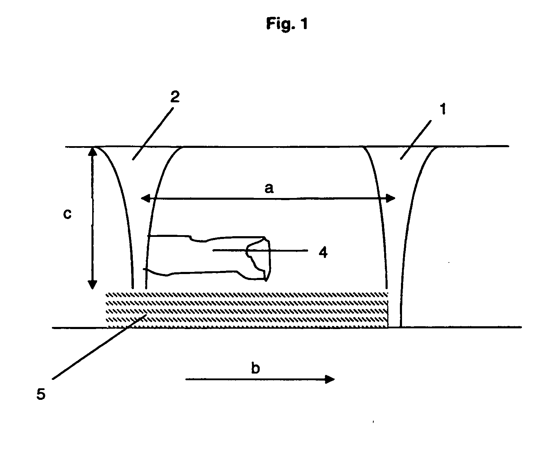

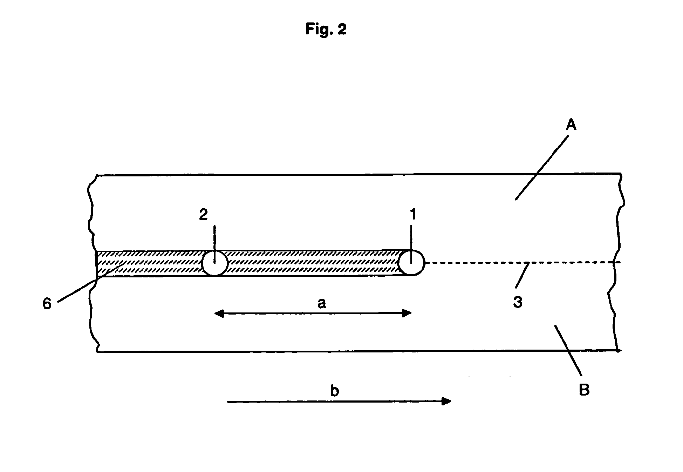

Die Figur 1 zeigt einen Schnitt durch die Schweißebene, d.h. den Fügespalt (3) zwischen den beiden zu fügenden Bauteilen (A, B). Die quasi trägheitslose Ablenkung des Elektronenstrahls zwischen zwei Positionierungen ist - wie aus dem Stand der Technik unter dem Stichwort "Strahlpendeln" bereits bekannt - derart steuerbar, dass der Elektronenstrahl an zwei zueinander entlang des Fügespalts (3) um ein Längemaß (a) beabstandeten Orten durch Energieeintrag Schmelzbäder erzeugen kann. Unter Zugrundelegung einer Schweißrichtung (b) lassen sich diese beiden Schmelzbäder somit in ein vorausliegendes erstes Schmelzbad (1) und ein nachfolgendes zweites Schmelzbad (2) unterscheiden. Die Figur 2 zeigt dies in der Draufsicht.

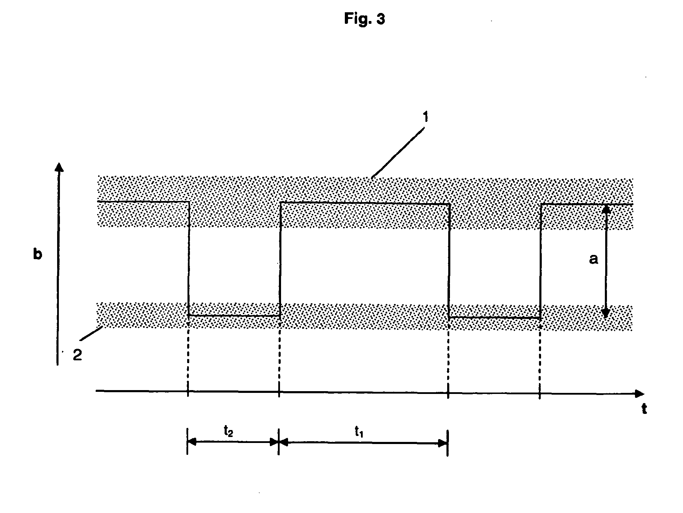

Aus Figur 3 ist ersichtlich, dass erfindungsgemäß die zeitlichen Verweildauern des Elektronenstrahls im Bereich des vorausliegenden Schmelzbades (t₁) sowie im Bereich des nachfolgenden Schmelzbades (t₂) in einem Verhältnis von näherungsweise 3:2 zueinander stehen. Die Steuerung der Elektronenstrahl-Ablenkung folgt erfindungsgemäß dabei einem rechteck-förmigen Verlauf. Ferner ist die Verweildauer im Bereich des vorausliegenden Schmelzbades (t₁) in Abhängigkeit von der Bauteildicke der zu fügenden Bauteile so dimensioniert, dass ein Durchschweißen der beiden zu fügenden Flächen im Zuge des vorausliegenden ersten Schmelzes gewährleistet ist. Über den Wurzelbereich der Schweißnaht (6) kommt es zu einem Materialaustrag von Schmelze, was sich bei deren Erstarrung in der Ausbildung von Lunkern niederschlägt. In zahlreichen Versuchen hat sich für die pendelnde Strahlablenkung eine Frequenz von 5000 Hz und eine Amplitude der Pendelbewegung in Schweißnahtrichtung von 7 mm als zweckmäßig erwiesen,

Durch das erfindungsgemäße Verfahren wird der Elektronenstrahl derart geführt, dass die sich unter seiner zweiten Auslenkungs-Positionierung bildende Aufschmelzungszone nicht in die lunkerfreie Materialzone (5) der Fügeflächen bzw. der zu fügenden Bauteile eindringt. Die Eindringtiefe (c) des Elektronenstrahls ist also auf circa 60 % - 70 % der Gesamttiefe der zu verschweißenden Bauteile begrenzt. Somit wird eine Stützwirkung erzeugt, die im Bereich des zweiten Schmelzbades - ähnlich wie eine Schweißbadsicherung - ein erneutes Ausfließen von Material über den Wurzelbereich der Naht verhindert. Der im Bereich des ersten Schmelzbades nach dessen Abkühlung entstandene Lunker wird im Zuge der erneuten Aufschmelzung der zu Lunkerbildung neigenden Materialbereiche der Bauteile ausgearbeitet.

Der Abstand der beiden äußersten Elektronenstrahl-Positionen (a) ist dabei so gewählt, dass das im Bereich des ersten Schmelzbades aufgeschmolzene Material vor Eintritt in die Wärmeeinflusszone des nachfolgenden zweiten Schmelzbades vollständig erstarrt ist.

### Bezugszeichenliste:

- 1: erstes Schmelzbad
- 2: zweites Schmelzbad
- 3: Fügespalt
- 4: Lunker
- 5: lunkerfreie Materialzone
- 6: Schweißnaht
- a: Amplitude der Pendelbewegung in Schweißnahtrichtung
- b: Schweißrichtung
- c: Tiefe der Dampfkapillare des zweiten Schmelzbades
- t₁: Verweildauer des Elektronenstrahls im Bereich des ersten Schmelzbads
- t₂: Verweildauer des Elektronenstrahls im Bereich d. zweiten Schmelzbads
- A, B: zu fügende Bauteile

## Patentansprüche

1. Verfahren zum Schweißen von Bauteilen (A, B) mittels eines Elektronenstrahls, der mittels hochfrequenter Strahlablenkung zwischen einem ersten, in Schweißrichtung vorausliegenden Schmelzbad (1) und einem zweiten, in Schweißrichtung nachfolgenden Schmelzbad (2) pendelt,
**dadurch gekennzeichnet, dass**
die pendelnde Strahlablenkung mit einer Frequenz von 4500 bis 5500 Hz erfolgt, wobei die Steuerung der Elektronenstrahl-Ablenkung einem rechteckförmigen Verlauf folgt, die zeitlichen Verweildauern des Elektronenstrahls im Bereich des vorausliegenden Schmelzbades (1) sowie im Bereich des nachfolgenden Schmelzbades (2) in einem Verhältnis von näherungsweise 3:2 zueinander stehen, sowie die Fügeflächen der Bauteile (A, B) in einer ersten Wärmeeinflusszone des vorausliegenden Schmelzbades vollständig und in einer zweiten Wärmeeinflusszone des nachfolgenden Schmelzbades bis in eine Tiefe (c) von circa 60 % - 70 % bezogen auf die Gesamttiefe der zu verschweißenden Bauteile aufgeschmolzen werden.

2. Verfahren zum Schweißen von Bauteilen mittels eines Elektronenstrahls nach Patentanspruch 1, **dadurch gekennzeichnet, dass** die pendelnde Strahlablenkung mit einer Amplitude (a) der Pendelbewegung in Schweißnahtrichtung von 5 bis 10 mm erfolgt.

## Claims

1. A method for the welding of components (A, B) by means of an electron beam fluctuating by means of high-frequency beam deflection between a first melt pool (1) located ahead in welding direction and a second, following melt pool (2), **characterized in that** the fluctuating beam deflection occurs with a frequency of 4500 to 5500 Hz, wherein the control of the electron beam deflection follows a rectangular course, the time dwell periods of the electron beam in the region of the pool (1) located ahead and in the region of the following melt pool (2) are at a ratio of approximately 3:2 to each other and the joining surfaces of the components (A, B) in a first heat influence zone of the melt pool located ahead and in a second heat influence zone of the following melt pool are melted as far as to a depth (c) of approximately 60% - 70% based on the overall depth of the components to be welded.

2. The method for the welding of components by means of an electron beam according to Patent Claim 1, **characterized in that** the fluctuating beam deflection occurs with an amplitude (a) of the pendulum movement in weld seam direction of 5 to 10 mm.

## Revendications

1. Procédé de soudage de pièces de construction (A, B) au moyen d'un rayon électronique qui oscille grâce à une déviation à haute fréquence du rayon entre un premier bain de fusion (1) situé à l'avant dans le sens de soudage et un second bain de fusion (2) situé à l'arrière dans le sens de soudage,
**caractérisé en ce que**
la déviation en oscillation a lieu à une fréquence de 4500 à 5500 Hz, la commande de la déviation du rayon électronique suivant une évolution en forme de rectangle, que les durées chronologiques de maintien du rayon électronique au niveau du bain de fusion (1) situé à l'avant ainsi qu'au niveau du bain de fusion (2) situé à l'arrière se situent dans un rapport d'approximativement 3 à 2 l'une par rapport à l'autre et que les surfaces en ailettes des pièces de construction (A, B) sont fondues entièrement dans une première zone d'influence thermique du bain de fusion situé à l'avant et jusqu'à une profondeur (c) d'environ 60 % à 70 % par rapport à la profondeur totale des pièces de construction à souder dans une seconde zone d'influence thermique du bain de fusion situé à l'arrière.

2. Procédé de soudage de pièces de construction au moyen d'un rayon électronique selon la revendication 1 du brevet, **caractérisé en ce que** la déviation en oscillation a lieu à une amplitude (a) du mouvement d'oscillation de 5 à 10 mm dans le sens du cordon de soudure.
